# EUROPEAN PATENT APPLICATION

(11) **EP 1 653 586 A2**
(43) Date of publication of application: **03.05.2006**
(21) Application number: 05016904.4
(22) Date of filing: 03.08.2005
(51) Int. Cl.: H02K 1/27, H02K 21/22

(54) **Motor, method for manufacturing field magnet assembly of the same, and washing machine with the same**

(30) Priority: 29.10.2004 KR 2004087347
(71) Applicant: LG ELECTRONICS INC., Seoul, 150-010 (KR)
(72) Inventor: Kim, Young Kwan, Buchun-si Kyungki-do 420-030 (KR); Kim, Byung Taek, Ansan-si Kyungki-do 425-020 (KR); Lee, Sung-Ho, Dongan-ku Anyang-si Kyungki-do 431-060 (KR); Kim, Deok Jin, Hwasung-si Kyungki-do 445-974 (KR); Park, Jin Soo, Inchun-si 405-246 (KR)
(74) Representative: TER MEER - STEINMEISTER & PARTNER GbR

(57) **Abstract**

A motor has a field magnet assembly (50) comprising a plurality of magnets (52) arranged in the circumferential direction of the field magnet assembly (50) such that like polarities face each other, and a plurality of magnet spacers (54) disposed between the magnets (52), respectively. Consequently, leakage of magnetic flux of the field magnet assembly (50) is minimized, and torque is improved as compared to a conventional motor having the same stacking and capacity. In a washing machine with the motor, the magnets (52) and the magnet spacers (54) are integrally attached to the outer tub (60) of the washing machine. Consequently, the size of the washing machine is minimized. The sizes of the inner tub (70) and the outer tub (60) are increased when the washing machine according to the present invention has the same size as the conventional washing machine. Consequently, the capacity of the washing machine is increased.

## Description

### BACKGROUND OF THE INVENTION

### Field of the Invention

The present invention relates to a motor, a method for manufacturing a field magnet assembly of the same, and a washing machine with the same, and, more particularly, to a motor that is capable of minimizing leakage of magnetic flux of a field magnet assembly, thereby improving torque performance, a method for manufacturing a field magnet assembly of the same, and a washing machine with the same.

### Description of the Related Art

Generally, motors are classified into a surface mounted magnet type motor and an embedded magnet type motor depending on how their magnetic circuits are constructed.

In the surface mounted magnet type motor, magnets of a field magnet assembly are disposed in the circumferential direction of an armature such that magnet torque is generated by interaction between magnetic flux generated from the magnets and electric current flowing along windings of the armature.

In the embedded magnet type motor, on the other hand, magnets are embedded in iron cores of a field magnet assembly. As a result, not only is magnet torque generated by interaction between magnetic flux generated from the magnets and electric current flowing along windings of an armature but also difference in magnetic resistance is generated depending on the relative position between a magnetic pole formed by electric current of the armature and a magnetic pole formed by the magnets. Reluctance torque is generated by the difference in magnetic resistance, and torque is generated by overlap between the magnet torque and the reluctance torque.

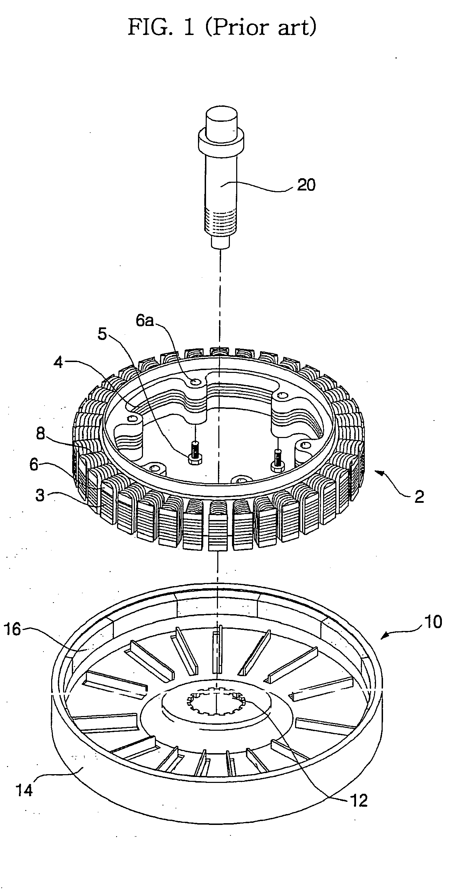

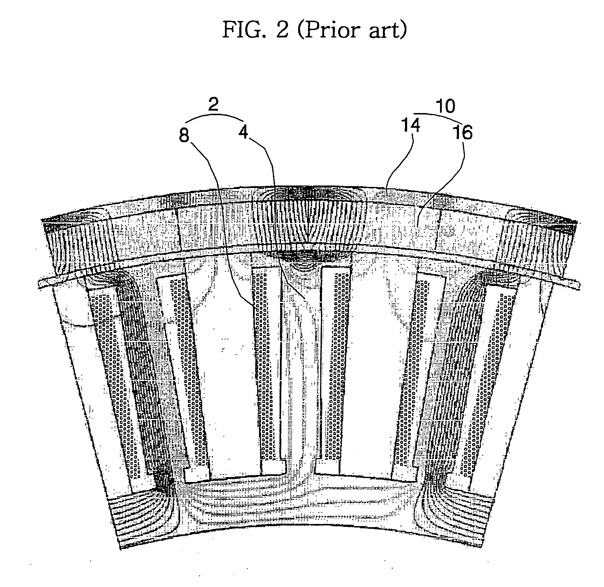

FIG. 1 is an exploded perspective view illustrating a conventional surface mounted magnet type motor, and FIG. 2 is an enlarged plan view, in part, illustrating magnetic flux distribution of the conventional surface mounted magnet type motor shown in FIG. 1.

As shown in FIGS. 1 and 2, the conventional surface mounted magnet type motor comprises: an armature 2 attached to an outer tub of a washing machine; a field magnet assembly 10 disposed at the outside of the armature 2; and a shaft 20 connected to the field magnet assembly 10.

The armature 2 comprises: stacked iron cores 4 each having a plurality of protrusions 3; an insulating member 6 surrounding the protrusions 3 of the stacked iron cores 4, the insulating member 6 having fixing holes 6a formed at the inner part thereof, through which bolts 5 are inserted such that the armature 2 is attached to the outer tub; and windings 8 wound on the protrusions 3 of the stacked iron cores 4 and the corresponding part of the insulating member 6.

The field magnet assembly comprises: a serration part 12 formed at the center part thereof such that the shaft 20 is engaged in the serration part 12; a magnet frame 14 configured to cover the circumferential part and one side part of the armature 2; and magnets 16 disposed at the inner circumferential surface of the magnet frame 14 in the circumferential direction of the armature 2.

If the diameter of the field magnet assembly 10 of the conventional surface mounted magnet type motor is greater than that of the stacked iron cores of the armature 2 (i.e., if the length of an overhang is increased), magnetic flux of the magnets 16, which is perpendicular to magnetic flux of the windings 8 of the armature 2 is somewhat increased. Consequently, a counter electromotive force is increased, and therefore, torque is increased.

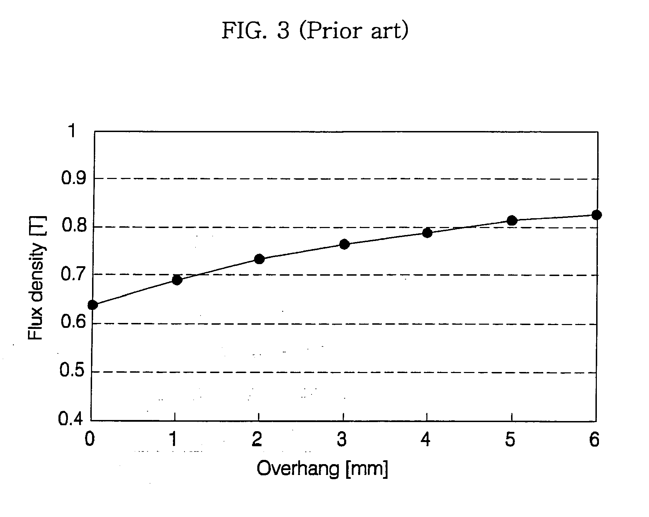

FIG. 3 is a graph illustrating magnetic flux density based on the length of the overhang of the conventional surface mounted magnet type motor shown in FIG. 1.

As shown in FIG. 3, the magnetic flux density is increased as the length of the overhang is increased. If the length of the overhang exceeds approximately 6 mm, however, the magnetic flux density is not increased any more. In other words, the magnetic flux density becomes saturated. This is because leakage of magnetic flux is increased, i.e., the amount of magnetic flux not passing through the stacked iron cores is increased, as the length of the overhang is increased.

As described above, the magnets 16 are disposed in the circumferential direction of the armature 2 in the conventional surface mounted magnet type motor. Consequently, the conventional surface mounted magnet type motor has the problem in that the counter electromotive force is increased due to increase of the overhang, and therefore, torque is increased.

### SUMMARY OF THE INVENTION

Therefore, the present invention has been made in view of the above problems, and it is an object of the present invention to provide a motor that is capable of minimizing leakage of magnetic flux of a field magnet assembly, thereby improving torque performance.

It is another object of the present invention to provide a method for manufacturing a field magnet assembly of the motor that is capable of assembling magnets and magnet spacers with minimized leakage of magnetic flux.

It is yet another object of the present invention to provide a washing machine comprising a field magnet assembly integrally attached to an outer tub of the washing machine, thereby minimizing the size of the washing machine or increasing the capacity of the washing machine.

In accordance with one aspect of the present invention, the above and other objects can be accomplished by the provision of a motor including an armature and a field magnet assembly, wherein the field magnet assembly comprises: a plurality of magnets arranged in the circumferential direction of the field magnet assembly such that like polarities face each other; and a plurality of magnet spacers disposed between the magnets, respectively.

Preferably, each of the magnet spacers is made of silicon steel or a magnetic material.

Preferably, each of the magnet spacers is formed in the shape of a trapezoid.

Preferably, the field magnet assembly further comprises:
a magnet frame, the magnet spacers being attached to the magnet frame.

Preferably, the field magnet assembly further comprises:
protrusions formed at one of the magnet spacers and the magnet frame; and grooves formed at the other of the magnet spacers and the magnet frame, the protrusions being engaged in the grooves, respectively.

In accordance with another aspect of the present invention, there is provided a method for manufacturing a field magnet assembly of a motor, the method comprising the steps of: arranging a plurality of magnets in the circumferential direction of the field magnet assembly such that like polarities face each other, and disposing a plurality of magnet spacers between the magnets, respectively, such that the magnet spacers alternate with magnets; and forming a magnet frame at the outer circumferential parts of the magnet spacers and the magnets by injection molding.

Preferably, each of the magnet spacers is made of a magnetic material.

In accordance with yet another aspect of the present invention, there is provided a washing machine comprising: a field magnet assembly including a plurality of magnets arranged in the circumferential direction of the field magnet assembly such that like polarities face each other, and a plurality of magnet spacers disposed between the magnets, respectively; an outer tub having the field magnet assembly formed thereon by insert injection molding; an inner tub rotatably disposed inside the outer tub; and an armature interacting with the field magnet assembly for rotating the inner tub.

Preferably, the armature is rotatably disposed inside the field magnet assembly.

Preferably, the machine further comprises: a slip ring fixedly attached to one of the field magnet assembly and the armature, the slip ring being in slip contact with the other of the field magnet assembly and the armature.

In the motor according to the present invention, the plurality of magnets are arranged in the circumferential direction of the field magnet assembly such that like polarities face each other. Consequently, the present invention has an effect of minimizing leakage of magnetic flux of the field magnet assembly, and therefore, improving torque as compared to a conventional motor having the same stacking and capacity.

When the motor according to the present invention is applied to a load having the same torque, the amount of stacking and winding of the motor is decreased. Consequently, the present invention has an effect of reducing the manufacturing costs of the motor.

In the method for manufacturing the field magnet assembly of the motor according to the present invention, the plurality of magnets are arranged in the circumferential direction of the field magnet assembly such that like polarities face each other, the plurality of magnet spacers are disposed between the magnets, respectively, such that the magnet spacers alternate with the plurality of magnets, and the magnet frame is formed at the outer circumferential parts of the magnet spacers and the magnets by injection molding. Consequently, the present invention has an effect of manufacturing the field magnet assembly such that leakage of magnetic flux of the field magnet assembly is minimized.

In the washing machine with the motor according to the present invention, the magnets and the magnet spacers are integrally attached to the outer tub of the washing machine. Consequently, the present invention has an effect of minimizing the size of the washing machine. Also, the sizes of the inner and outer tubs are increased when the washing machine according to the present invention has the same size as the conventional washing machine. Consequently, the present invention has an effect of increasing the capacity of the washing machine.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exploded perspective view illustrating a conventional surface mounted magnet type motor;
FIG. 2 is an enlarged plan view, in part, illustrating magnetic flux distribution of the conventional surface mounted magnet type motor shown in FIG. 1;
FIG. 3 is a graph illustrating magnetic flux density based on the length of an overhang of the conventional surface mounted magnet type motor shown in FIG. 1;
FIG. 4 is an exploded perspective view illustrating a motor according to a preferred embodiment of the present invention;
FIG. 5 is an enlarged plan view, in part, illustrating magnetic flux distribution of the motor according to the preferred embodiment of the present invention shown in FIG. 4;
FIG. 6 is a schematic view illustrating principal components of a washing machine with a motor according to a preferred embodiment of the present invention; and
FIG. 7 is a longitudinal sectional view illustrating the washing machine with the motor according to the preferred embodiment of the present invention shown in FIG. 6.

### DESCRIPTION OF THE PREFERRED EMBODIMENTS

Now, preferred embodiments of the present invention will be described in detail with reference to the accompanying drawings.

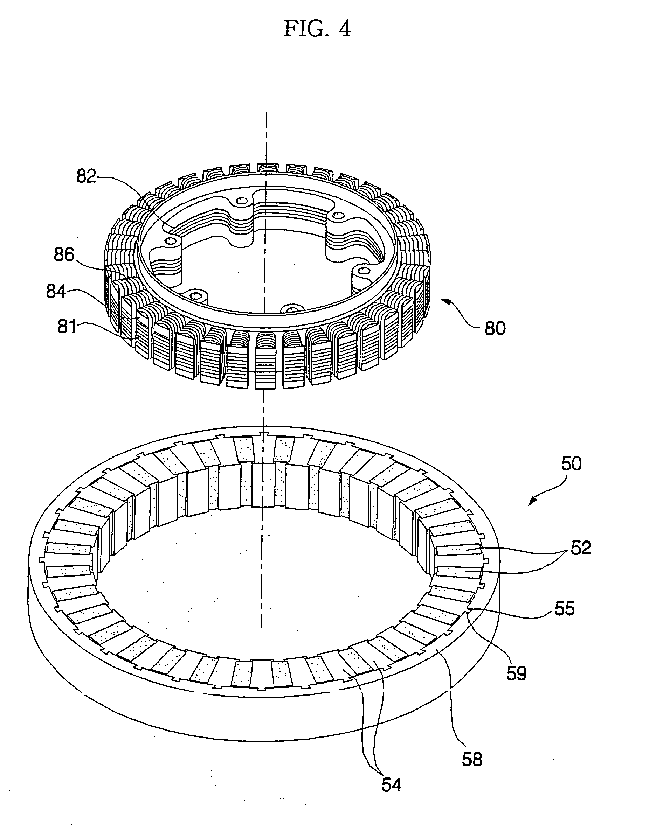

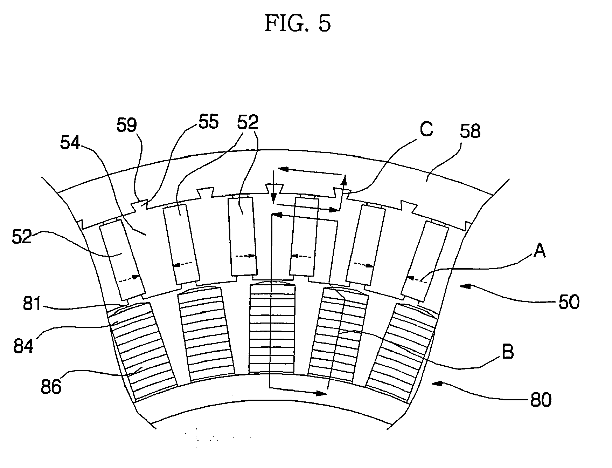

FIG. 4 is an exploded perspective view illustrating a motor according to a preferred embodiment of the present invention, and FIG. 5 is an enlarged plan view, in part, illustrating magnetic flux distribution of the motor according to the preferred embodiment of the present invention shown in FIG. 4.

As shown in FIGS. 4 and 5, the motor comprises a field magnet assembly 50 and an armature 80.

The field magnet assembly 50 comprises: a plurality of magnets 52 arranged in the circumferential direction A of the field magnet assembly 50 such that like polarities face each other; and a plurality of magnet spacers 54 disposed between the magnets 52, respectively.

The magnet spacers 54 are physically and magnetically separated from each other. The magnet spacers 54 are spaced apart from each other by a lateral width of each magnet 52 such that the magnet spacers 54 can be fitted in the space between the respective magnets 52.

Specifically, the magnet spacers 54 alternate with the magnets 52. Each of the magnet spacers 54 is made of silicon steel or a magnetic material. Each of the magnet spacers 54 is formed in the shape of a trapezoid such that the magnet spacers 54 are configured in a cylindrical shape together with the magnets 52.

The field magnet assembly 50 further comprises: a magnet frame 58, to which the magnet spacers 54 are attached.

The magnet frame 58 is a nonmagnetic body, which is made by injection molding of plastic.

At one of the magnet spacers 54 and the magnet frame 58 are formed protrusions 55, and at the other of the magnet spacers 54 and the magnet frame 58 are formed grooves 59, in which the protrusions 55 are engaged, respectively. In the following description, the protrusions 55 are formed at the magnet spacers, respectively, and the grooves 59 are formed at the corresponding positions of the magnet frame 58.

The field magnet assembly 50 is manufactured as follows: the plurality of magnets 52 are arranged in the circumferential direction A of the field magnet assembly 50 such that like polarities face each other, and then the plurality of magnet spacers 54 are disposed between the magnets 52, respectively, such that the magnet spacers 54 alternate with the plurality of magnets 52.

After that, the magnet frame 58 is formed at the outer circumferential parts of the magnet spacers 54 and the magnets 52 by insert injection molding.

The armature 80 is rotatably disposed inside the field magnet assembly 50.

The armature 80 comprises: stacked iron cores 82 each having a plurality of protrusions 81; an insulating member 84 surrounding the protrusions 81 of the stacked iron cores 82; and windings 86 wound on the protrusions 81 of the stacked iron cores 82 and the corresponding part of the insulating member 84.

Since the magnets 52 are arranged in the circumferential direction A of the field magnet assembly 50 such that like polarities face each other, and the magnet spacers 54 are physically and magnetically separated from each other, the amount of magnetic flux C leaking from main magnetic flux B is minimized when electric current is supplied to the windings 86 of the motor with the above-stated construction.

The motor with the above-stated construction according to the present invention is applicable to a washing machine. In this case, one of the field magnet assembly 50 and the armature 80 is connected to a rotary shaft of the washing machine, and the other of the field magnet assembly 50 and the armature 80 is connected to an outer tub of the washing machine.

When the field magnet assembly 50 of the motor is attached to the outer tub of the washing machine, it is possible to directly attach the field magnet assembly 50 to the outer tub of the washing machine without attaching the magnet frame 58 to the outer tub of the washing machine.

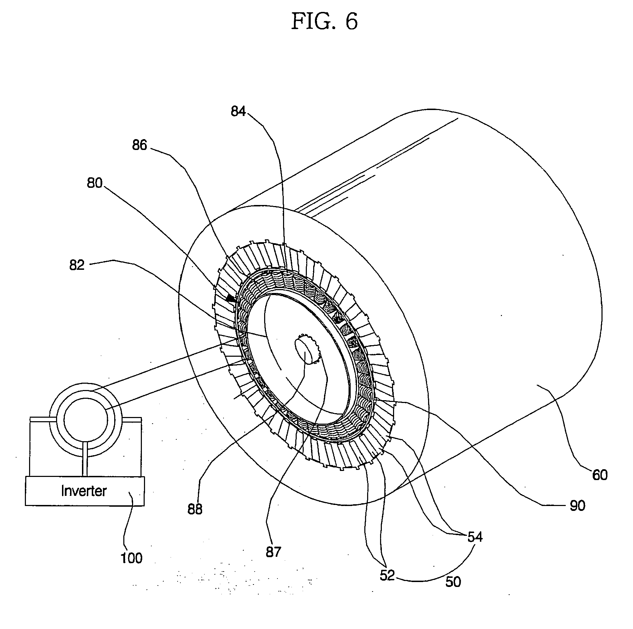

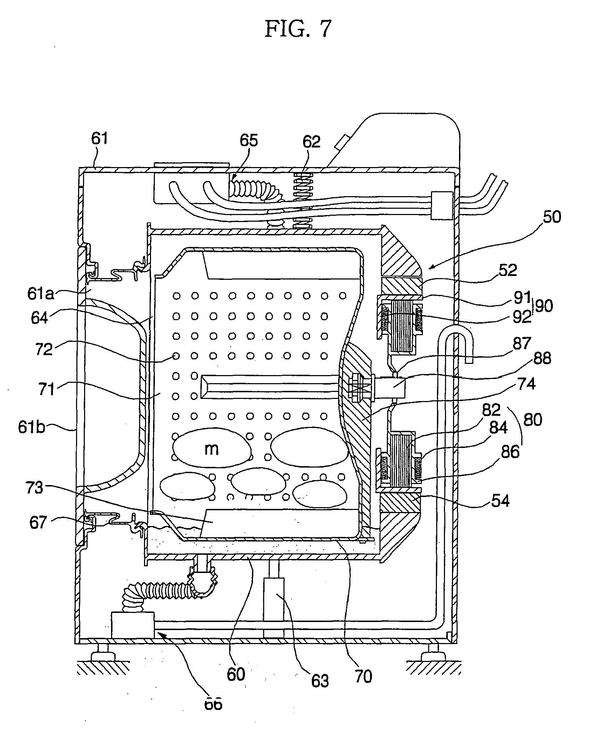

FIG. 6 is a schematic view illustrating principal components of a washing machine with a motor according to a preferred embodiment of the present invention, and FIG. 7 is a longitudinal sectional view illustrating the washing machine with the motor according to the preferred embodiment of the present invention shown in FIG. 6.

As shown in FIGS. 6 and 7, the washing machine comprises: a field magnet assembly 50 having a plurality of magnets 52 arranged in the circumferential direction of the field magnet assembly 50 such that like polarities face each other and a plurality of magnet spacers 54 disposed between the magnets 52, respectively; an outer tub 60 having the field magnet assembly 50 formed thereon by insert injection molding; an inner tub 70 rotatably disposed inside the outer tub 60; and an armature 80 interacting with the field magnet assembly 50 for rotating the inner tub 70.

The outer tub 60 is disposed in a cabinet 61, which forms the external appearance of the washing machine, while being supported by a spring 62 and a damper 63 in a shock-absorbing fashion.

The outer tub 60 is a kind of magnet frame, which is made by injection molding. The magnet spacers 54 are attached to the outer tub 60.

The outer tub 60 is provided at the front part thereof with an opening hole 64. The field magnet assembly 50 is attached to the rear of the outer tub 60.

To the outer tub 60 is connected a water supply unit 65 for supplying wash water into the outer tub 60. To the outer tub 60 is also connected a drainage unit 66 for draining wash water in the outer tub 60 out of the washing machine.

The inner tub 70 is provided at the front part thereof with an opening hole 71, and at the circumferential part thereof with through-holes 72. To the inner circumferential surface of the inner tub 70 are attached lifts 73 for lifting the laundry in the tub 70.

To the rear of the inner tub 70 is attached a spider 74, to which a shaft is connected, which will be described below.

The armature 80 is rotatably disposed inside the field magnet assembly 50.

The armature 80 is provided at the center part of the insulating member 84 with a serration part 87.

Through the serration part 87 is inserted a shaft 88, which is connected to the inner tub 70.

The washing machine further comprises: a slip ring 90 fixedly attached to one of the field magnet assembly 50 and the armature 80, the slip ring 90 being in slip contact with the other of the field magnet assembly 50 and the armature 80.

The slip ring 90 is a kind of sealing member that prevents leakage of wash water from the space between the field magnet assembly 50 and the armature 80 while rotatably supporting the armature 80. In the following description, the slip ring 90 is fixedly attached to one of the field magnet assembly 50 and the outer tub 60.

The slip ring 90 comprises: a circumferential ring part 91 fixedly attached to one of the field magnet assembly 50 and the outer tub 60 such that the circumferential ring part 91 is disposed around the outer circumferential part of the armature 80; and a front ring part 92 extending from the circumferential ring part 91 while being bent perpendicular to the circumferential ring part 91 such that the front ring part 92 partially covers the armature 80 to prevent wash water from entering the armature 80.

The washing machine further comprises: an inverter 100 for supplying electric current to the windings 86 of the armature 80.

Reference numeral 61a indicates a laundry inlet/outlet hole formed at one side of the cabinet 61, especially, at the front part of the cabinet 61, for allowing the laundry to be put into or removed from the inner tub 70 therethrough.

Reference numeral 61b indicates a door hingedly connected to the cabinet 61 for opening and closing the laundry inlet/outlet hole 61a.

Reference numeral 67 indicates a gasket disposed between the opening hole 64 of the outer tub 60 and the laundry inlet/outlet hole 61a of the cabinet 61 for preventing the laundry and wash water from being discharged through the space between the cabinet 61 and the outer tub 60.

The operation of the washing machine with the above-stated construction according to the present invention will now be described.

When a user puts the laundry m into the inner tub 70 of the washing machine, closes the door 61b, and operates the washing machine, wash water containing detergent dissolved therein is supplied to the outer tub 60 by the water supply unit 65, and is gathered in the inner lower part of the outer tub 60. As a result, the lower part of the inner tub 70 sinks under the wash water containing detergent dissolved therein, and therefore, the laundry m in the inner tub 70 is wetted by the wash water containing detergent dissolved therein introduced into the inner tub 70 through the through-holes 72.

When electric current is supplied to the windings 86 of the armature 80 by the inverter 100, an electromagnetic force is generated between the windings 86 and the magnets 52, and therefore, the armature 70 is rotated inside the field magnet assembly 50.

When the armature 70 is rotated, the shaft 88 is also rotated. As a result, the spider 74 is rotated, and therefore, the inner tub 70 is rotated along with the spider 74. At this time, the laundry m in the inner tub 70 is lifted by the lifts 62, and is then dropped from the lifts 62. In this way, stains are removed from the laundry.

After the above-described washing operation of the washing machine is finished, the contaminated wash water in the outer tub 60 is drained out of the washing machine through the drainage unit 66.

After that, several rinsing operations of the washing machine are performed to rinse out bubbles left in the laundry m. Clean water containing no detergent dissolved therein is supplied to the outer tub 60 through the water supply unit 65. When electric current is supplied to the windings 86 of the armature 80 by the inverter 100, the armature 80, the shaft 88, the spider 74, and the inner tub 70 are rotated as in the washing operation. At this time, the laundry m in the inner tub 70 is lifted by the lifts 73, and is then dropped from the lifts 73. In this way, the bubbles left in the laundry are rinsed out.

The contaminated water, including the bubbles, is drained out of the washing machine through the drainage unit 66.

After the several rinsing operations are finished, the dewatering operation of the washing machine is performed to remove moisture from the laundry.

During the dewatering operation, electric current is supplied to the windings 86 of the armature 80 by the inverter 100. In the dewatering operation, the armature 80, the shaft 88, the spider 74, and the inner tub 70 are rotated at higher speed than in the washing operation or the rinsing operations. As a result, the laundry m in the inner tub 70 is attached to the inner wall of the inner tub 70. In this way, the moisture is centrifugally removed from the laundry.

The moisture removed from the laundry according to the high-speed rotation of the inner tub 70 is gathered in the outer tub 60 through the through-holes 72 of the inner tub 70, and is then drained out of the washing machine through the drainage unit 66.

As apparent from the above description, the present invention has the following effects.

In the motor according to the present invention, the plurality of magnets are arranged in the circumferential direction of the field magnet assembly such that like polarities face each other. Consequently, the present invention has an effect of minimizing leakage of magnetic flux of the field magnet assembly, and therefore, improving torque as compared to a conventional motor having the same stacking and capacity.

When the motor according to the present invention is applied to a load having the same torque, the amount of stacking and winding of the motor is decreased. Consequently, the present invention has an effect of reducing the manufacturing costs of the motor.

In the method for manufacturing the field magnet assembly of the motor according to the present invention, the plurality of magnets are arranged in the circumferential direction of the field magnet assembly such that like polarities face each other, the plurality of magnet spacers are disposed between the magnets, respectively, such that the magnet spacers alternate with the plurality of magnets, and the magnet frame is formed at the outer circumferential parts of the magnet spacers and the magnets by injection molding. Consequently, the present invention has an effect of manufacturing the field magnet assembly such that leakage of magnetic flux of the field magnet assembly is minimized.

In the washing machine with the motor according to the present invention, the magnets and the magnet spacers are integrally attached to the outer tub of the washing machine. Consequently, the present invention has an effect of minimizing the size of the washing machine. Also, the sizes of the inner and outer tubs are increased when the washing machine according to the present invention has the same size as the conventional washing machine. Consequently, the present invention has an effect of increasing the capacity of the washing machine.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A motor including an armature (80) and a field magnet assembly (50), wherein the field magnet assembly (50) comprises:
a plurality of magnets (52) arranged in the circumferential direction (A) of the field magnet assembly (50) such that like polarities face each other; and
a plurality of magnet spacers (54) disposed between the magnets (52), respectively.

2. The motor as set forth in claim 1, wherein each of the magnet spacers (54) is made of silicon steel or a magnetic material.

3. The motor as set forth in claim 1, wherein each of the magnet spacers (54) is formed in the shape of a trapezoid.

4. The motor as set forth in claim 1, wherein the field magnet assembly (50) further comprises:
a magnet frame (58), the magnet spacers (54) being attached to the magnet frame (58).

5. The motor as set forth in claim 4, wherein the field magnet assembly (50) further comprises:
protrusions (55) formed at one of the magnet spacers (54) and the magnet frame (58); and
grooves (59) formed at the other of the magnet spacers (54) and the magnet frame (58), the protrusions (55) being engaged in the grooves (59), respectively.

6. A method for manufacturing a field magnet assembly (50) of a motor, the method comprising the steps of:
arranging a plurality of magnets (52) in the circumferential direction (A) of the field magnet assembly (50) such that like polarities face each other, and disposing a plurality of magnet spacers (54) between the magnets (52), respectively, such that the magnet spacers (54) alternate with magnets (52); and
forming a magnet frame (58) at the outer circumferential parts of the magnet spacers (54) and the magnets (52) by injection molding.

7. The method as set forth in claim 6, wherein each of the magnet spacers (54) is made of a magnetic material.

8. A washing machine comprising:
a field magnet assembly (50) including
a plurality of magnets (52) arranged in the circumferential direction of the field magnet assembly (50) such that like polarities face each other, and
a plurality of magnet spacers (54) disposed between the magnets (52), respectively;
an outer tub (60) having the field magnet assembly (50) formed thereon by insert injection molding;
an inner tub (70) rotatably disposed inside the outer tub (60); and
an armature (80) interacting with the field magnet assembly (50) for rotating the inner tub (70).

9. The machine as set forth in claim 8, wherein the armature (80) is rotatably disposed inside the field magnet assembly (50).

10. The machine as set forth in claim 9, further comprising:
a slip ring (90) fixedly attached to one of the field magnet assembly (50) and the armature (80), the slip ring (90) being in slip contact with the other of the field magnet assembly (50) and the armature (80).
